Europäisches Patentamt

**European Patent Office**

Office européen des brevets

(11) Publication number: **0 373 710**
**A1**

# EUROPEAN PATENT APPLICATION

(21) Application number: **89203134.5**

(22) Date of filing: **11.12.89**

(51) Int. Cl.⁵: **G11B 5/008, G11B 5/02,**
**G11B 5/53, G11B 20/10**

(30) Priority: **16.12.88 NL 8803082**

(43) Date of publication of application:
**20.06.90 Bulletin 90/25**

(84) Designated Contracting States:
**AT DE ES FR GB IT NL SE**

(71) Applicant: **N.V. Philips' Gloeilampenfabrieken**
**Groenewoudseweg 1**
**NL-5621 BA Eindhoven(NL)**

(72) Inventor: **Jansen, Theodurus Henricus Petrus**
**Gerardus**
**c/o INT. OCTROOIBUREAU B.V. Prof.**
**Holstlaan 6**
**NL-5656 AA Eindhoven(NL)**

(74) Representative: **van der Kruk, Willem**
**Leonardus et al**
**INTERNATIONAAL OCTROOIBUREAU B.V.**
**Prof. Holstlaan 6**
**NL-5656 AA Eindhoven(NL)**

(54) **Device for recording an audio and a video signal.**

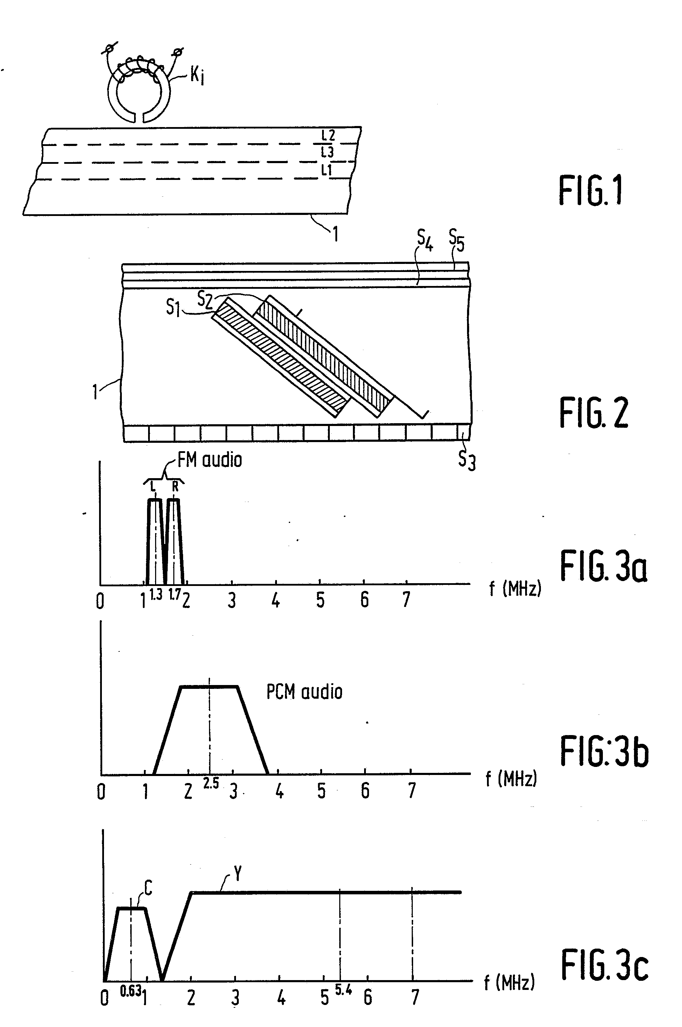

(57) In tracks ($S_1$, $S_2$, ... ) which are inclined relative to the longitudinal direction of a magnetic record carrier (1) a first signal, for example a frequency-modulated audio signal, is recorded in a first layer ($L_1$) deep in the record carrier, a second signal, for example a PCM-modulated audio signal, is recorded in a second layer ($L_3$) which is situated less deep in the record carrier, and a video signal is recorded in a layer ($L_2$) which is situated even less deep in the record carrier (Fig. 1). Since the PCM audio signal is subjected to an additional modulation step before it is recorded, to convert it into a QPSK (quadrature-phase-shift keying) signal, peak-to-peak amplitude variations will arise in the signal to be recorded. As this signal is recorded over the FM audio signal in the same track the reproduction amplitude of the FM audio signal will be influenced in such a way that an additional modulation noise contribution arises in the frequency-modulated audio signal being reproduced. In order to avoid this modulation noise the QPSK signal is first amplitude-limited in a limiter circuit (15) before it is applied to the write head(s) (9) during recording.

FIG. 2

## Device for recording an audio and a video signal.

The invention relates to a device for recording an audio signal and a video signal in tracks which are inclined relative to the longitudinal direction of a magnetic record carrier, which device has a first input terminal for receiving the audio signal and a second input terminal for receiving the video signal, the device comprising a first signal-processing unit having an output coupled to first write means arranged on a rotatable head drum, for recording a first signal, for example an FM modulated audio signal, in a first layer deep in the magnetic record carrier, the second input terminal being coupled to a video signal processing unit, which has an output coupled to second write means arranged on the rotatable head drum, for recording the video signal in a second layer less deep in the magnetic record carrier, the device further comprising a third signal processing unit having an output coupled to third write means arranged on the rotatable head drum, for recording a third signal in a third layer which is less deep than the first and deeper than the second layer in the magnetic record carrier.

Such a device is known from the "Nikkei Sangyo Newspaper" of 8 November 1988. Said newspaper describes a video recorder which in a first recording step is capable of recording a first signal in the form of an FM-modulated audio signal in a first layer deep in a track on the magnetic record carrier and in a next recording step recording the third signal (in this case in the form of a PCM modulated audio signal) in the same track, over the recorded FM audio signal, in the (third) layer which is situated less deep in the record carrier than the first layer. Subsequently, the video signal, for example a signal of the S-VHS type, is recorded, also in the same track over the two recorded audio signals, in the (second) layer which is situated less deep in the record carrier than the first layer.

For this it is important that the three signals are recorded with such a strength that during recording of one of the signals, i.e. the PCM modulated audio signal or the video signal, the signal (signals) previously recorded in the same track is (are) not erased. Nevertheless, it may be problematic to select the amplitudes of the different recording currents in such a way that during reproduction each of the three layers produces a signal of satisfactory quality.

It is an object of the invention to provide a recording device in which said three signals can be recorded successively in one track on the record carrier in such a way that signals of improved quality can be obtained during reproduction.

To this end the device in accordance with the invention is characterized in that the output of the third signal-processing unit is coupled to the input of a limiter circuit, which limiter circuit is configured to limit the amplitude of the output signal of the third signal-processing unit, and in that an output of the limiter circuit is coupled to the third write means.

The invention is based on the recognition of the following fact. When it is assumed that in the second recording step a signal having a peak-to-peak value which varies with time is to be recorded, for example the PCM modulated signal which is converted into an offset differential QPSK (quadrature phase shift keying) signal in the second signal processing unit, this means that in this second recording step the signal is in fact recorded with a strength and hence at a depth which varies in time. As a result of this the boundary plane between the first and deepest layer, in which the FM audio signal has been recorded, and the less deep (third) layer, in which the PCM audio signal has been recorded, extends no longer "parallel" to the record-carrier surface. These recording-depth variations of the PCM audio signal lead to amplitude variations in the FM audio signal during reproduction and thus constitute an additional contribution to the noise component in the FM audio signal being read. This contribution takes the form of modulation noise. This means that the signal-to-noise ratio of the FM audio signal read from the record carrier has deteriorated.

If prior to recording the output signal of the third signal processing unit is now limited to an amplitude value which is smaller than or at least equal to the smallest peak-to-peak value of the output signal, the variation in recording depth of the recorded PCM audio signal is reduced or even eliminated. This in turn results in the amplitude modulation in the FM audio signal being (substantially) zero during reproduction. This yields a substantial gain in signal-to-noise ratio in the FM signal being read. If desired, the gain thus obtained may be divided amongst the signal-to-noise ratios of each of these three signals recorded on the record carrier, depending on the choice of the recording currents.

The method of limiting may differ. Satisfactory results can be achieved both with a "soft limiter" and with a "hard limiter".

It is to be noted that from the published Japanese Patent Application 61-294665 it is known to limit a PCM signal prior to recording on a magnetic record carrier. However, this does not relate to a recording to be made in an intermediate layer between two layers which are also intended for recording signals therein.

Embodiments of the invention will now be described in more detail, by way of example, with reference to the drawings. In the drawings

Fig. 1 is a cross-sectional view of the record carrier,

Fig. 2 is a plan view of the record carrier,

Fig. 3a shows the range of the frequency spectrum of the FM audio signal to be recorded in the record carrier, Fig. 3b shows the range of the frequency spectrum of the PCM audio signal to be recorded, and Fig. 3c shows the range of the frequency spectrum of the video signal to be recorded in accordance with the S-VHS standard,

Fig. 4 shows the device in accordance with the invention,

Fig. 5 is a graph in which the reproduction amplitudes of three signals are plotted as functions of the write amplitude of a 2.5 MHz carrier wave,

Fig. 6 is again a cross-sectional view of the record carrier,

Fig. 7 is a circuit for realising an offset differential QPSK signal,

Fig. 8 shows the output signal of the circuit shown in Fig. 7,

Fig. 9 shows a first embodiment, and

Fig. 10 shows a second embodiment of the limiter circuit in the device in accordance with the invention.

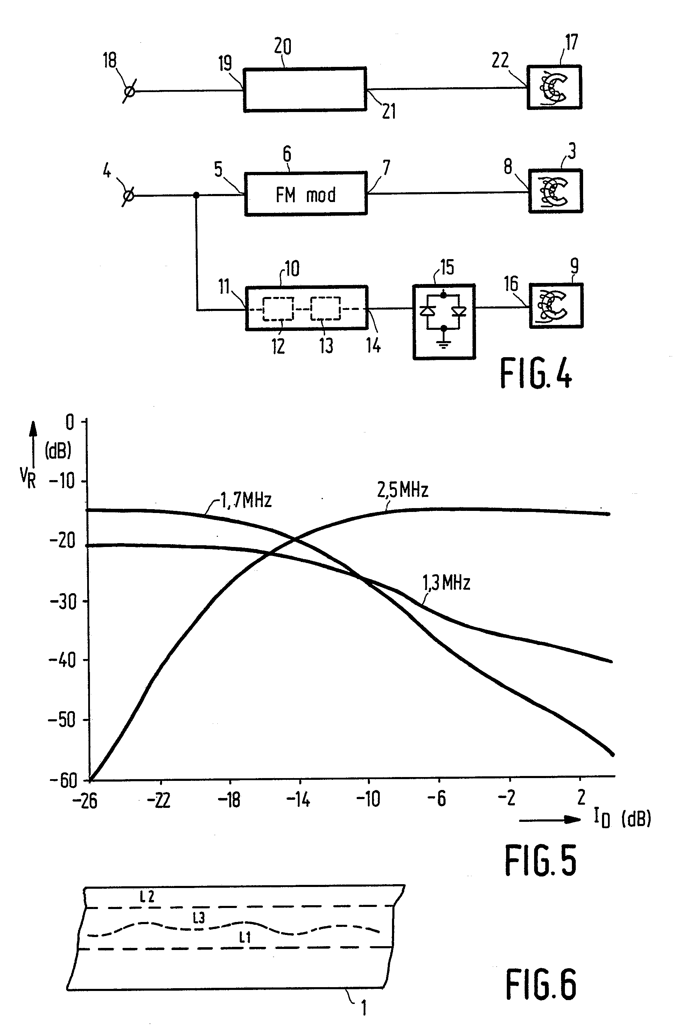

Fig. 1 is a cross-sectional view of a record carrier 1 which sectional view is taken in the longitudinal direction of the track, precisely in the track, for example the track $S_1$ in Fig. 2. Fig. 2 is a plan view of the record carrier 1, showing the various tracks which can be recorded by means of the device. Fig. 3 shows the range of the frequency spectra of the three signals, namely the FM audio signal (Fig. 3a), the PCM audio signal (Fig.3b), and the video signal (Fig. 3c), which are recorded in a track on the record carrier. Fig. 4 shows very diagrammatically a device in accordance with the invention for recording the signals shown in Fig. 3 in the record carrier shown in Figs. 1 and 2.

In a first recording step a frequency modulated audio signal is recorded deep in the layer $L_1$ in the record carrier 1, see Fig. 1, by means of first write means 3 (see Fig. 4). For this purpose the device comprises an input terminal 4 for receiving the audio signal, for example a stereo signal comprising a left channel and a right-channel component. The input terminal 4 is coupled to an input 5 of an FM modulator 6. In this FM modulator 6 the audio signal is frequency-modulated in such a way that the left-channel component is modulated on a 1.3 MHz carrier wave and the right-channel component is modulated on a 1.7 MHz carrier wave, see Fig. 3(a). This signal is applied to the output 7 of the modulator 6. This output is coupled to the input 8 of the first write means 3. Said first write means comprise, for example, two diametrally opposed audio heads $K_1$ and $K_2$ arranged along the circumference of a rotatable head drum. The heads have gaps with, for example, oppositely oriented azimuth angles of 30°. During half a revolution of the head drum the head $K_1$ writes a track $S_1$, i.e. the narrow portion of the track $S_1$ represented by the hatched area. During a subsequent half revolution the head $K_2$ writes the track $S_2$, i.e. the narrow portion of track $S_2$ also indicated by a hatched area.

Above it has been assumed that the recorder is an NTSC recorder, in particular an NTSC S-VHS recorder. If the recorder is a PAL recorder the carrier waves for the FM audio should be selected to be 1.4 MHz and 1.8 MHz.

In a second recording step a PCM audio signal is recorded in the layer $L_3$, see Fig. 1, by write means 9, see Fig. 4. The device comprises a signal processing unit 10, which also has an input 11 coupled to the input terminal 4. The signal-processing unit 10 comprises a PCM modulator unit 12 and a second modulator unit 13 arranged in series therewith. The second modulator unit 13 is adapted to generate a QPSK (quadrature phase shift keying) signal, in particular an offset differential QPSK signal, which is applied to the output 14 of the signal processing unit 10. Fig. 3b shows the range of the frequency spectrum of this signal, which is situated in a frequency range around a central frequency of, for example, 2.5 MHz. The output 14 is coupled to an input 16 of the write means via a limiter 15. The (third) write means 9 comprise, for example, two diametrally opposed heads $K_3$ and $K_4$ arranged along the circumference of the head drum. The heads $K_3$ and $K_4$ are arranged in such a way that they record the PCM audio signal in the tracks formed by the heads $K_1$ and $K_2$ over the information recorded in the tracks $S_1$ and $S_2$ by the heads $K_1$ and $K_2$ but in a layer which is less deep, namely the layer $L_3$. The heads $K_3$ and $K_4$ have gaps with, for example, azimuth angles of 20° which are oppositely oriented. The tracks formed by the heads $K_3$ and $K_4$ may have the same width as the tracks formed by the heads $K_1$ and $K_2$. However, this is not necessary. Moreover, the tracks written by the heads $K_3$ and $K_4$ may be slightly offset from the tracks written by the heads $K_1$ and $K_2$, i.e. partly overlapping one another.

In the third recording step a video signal is recorded in the layer $L_2$, see Fig. 1, by means of (second) write means 17 (see Fig. 4). For this purpose the device comprises an input terminal 18 for receiving a video signal. The input terminal 18 is coupled to an input 19 of a video signal processing unit 20. The output of the processing unit 20 is coupled to the input 22 of the write means 17. The processing unit 20 is adapted, for example, to generate a video signal in conformity with the S-VHS standard on its output 21. The range of the frequency spectrum of such a signal is shown in Fig. 3c.

The signal contains a chrominance component situated in a frequency range around a frequency of approximately 0.63 MHz and an FM luminance component situated in the frequency range above approximately 1.5 MHz. The carrier wave of the luminance component can vary in a range from 5.4 to 7 MHz.

The (second) write means 17 comprise, for example, two diametrally opposed heads $K_5$ and $K_6$ arranged along the circumference of the head drum. Again the heads $K_5$ and $K_6$ are arranged in such a way that they record the video signal in the tracks $S_1$ and $S_2$ over the FM audio signal and the PCM audio signal which has been converted into a QKPS signal. In the present case the video head $K_5$ and $K_6$ are wider than the heads $K_1$, $K_2$, $K_3$ and $K_4$, see Fig. 2. The heads $K_5$ and $K_6$ for example have oppositely oriented azimuth angles of approximately 6°.

Fig. 1 also shows how an arbitrary head $K_i$ (i ranging from 1 to 6) records a signal in the record carrier. Fig. 2 shows that still further tracks can be recorded in the record carrier 1. Examples of these are a synchronisation track $S_3$ and further longitudinal audio tracks $S_4$ and $S_5$ in which the left-channel component and the right-channel component respectively of a stereo signal can be recorded.

The level of the recording current of the FM audio signal should be selected in such a way that the recording levels of the left-channel component and the right-channel component of the FM audio signal, after this has been overwritten by the PCM audio signal and the video signal, are substantially equal.

Since the video signal is recorded in the layer $L_2$ the strength of the recording current of the video signal will have the smallest influence on the reproducing level of the FM audio signal. The strength of the recording current of the PCM audio signal has a very distinct influence on the reproducing level of the FM audio signal. This is illustrated in Fig. 5.

Fig. 5 shows a graph in which the reproducing levels of a number of signals recorded on the record carrier 1 are plotted as functions of the recording current $I_D$ of a carrier wave signal. The values along both axes are plotted in dB. The signals are three (sinewave) carrier signals having frequencies of 1.3 MHz, 1.7 MHz and 2.5 MHz respectively.

The 1.3 MHz and 1.7 MHz carrier signals are of course characteristic of the two components of the FM audio signal which are recorded, see Fig. 3a. First of all, these two carrier signals have been recorded concurrently by means of the FM audio heads 3, see Fig. 4. The recording current for the 1.7 MHz carrier wave then has a specific value $I_{FM1}$ and the recording current for the 1.3 MHz carrier wave has a specific (different) value $I_{FM2}$. $I_{FM1}$ is larger than $I_{FM2}$. In the example given in Fig. 5 $I_{FM2}$ is 10 dB weaker than $I_{FM1}$. Subsequently the 2.5 MHz carrier wave is recorded with a specific recording current $I_D$. This 2.5 MHz carrier wave is, of course, characteristic of the PCM audio signal to be recorded.

From Fig. 5 it will be apparent that the recording current of the PCM audio signal (the 2.5 MHz carrier wave) should be selected to be approximately -10 dB if the reproduction levels of the left- and right-channel component of the FM audio signal (the 1.3 MHz and 1.7 MHz carrier waves) should be equal. This is because the curves for the 1.3 MHz and the 1.7 MHz carrier wave intersect one another for $I_D = -10$ dB.

It will be appreciated that this is a specific case. If the difference between $I_{FM1}$ and $I_{FM2}$ is assumed to be different another value for $I_D$ will be found, which corresponds to the intersection of the two lines for the 1.3 MHz and 1.7 MHz carrier waves. For example, if the difference between $I_{FM1}$ and $I_{FM2}$ is increased while $I_{FM1}$ remains the same, the point of intersection will be shifted to the right in the graph shown in Fig. 5. This means that the recording current $I_D$ should then be increased. The reproduction level of the 2.5 MHz carrier will then increase. Conversely, the reproduction level of the 1.3 MHz and 1.7 MHz carrier waves will decrease. The choice of the recording currents should therefore be a compromise yielding an optimum result for the reproduction levels of all signals.

Fig. 5 thus shows that the recording current $I_D$ should be adjusted to approximately -10 dB. However, this value is situated in a range in which the curves for the 1.3 MHz and 1.7 MHz carrier waves are falling. This means that a variation in the recording current $I_D$ leads to a variation in the reproduction level $V_R$ for the 1.3 MHz and 1.7 MHz carrier waves.

Put differently, variations in the recording current $I_D$ give rise to variations in the depth of the boundary layer between the layers $L_1$ and $L_3$, see Fig. 6. During reproduction this again results in variations in the reproduction level of the FM audio signal.

The signal-processing unit 10, see Fig. 4, which supplies the PCM audio signal, delivers an output signal whose peak-to-peak value varies as a function of time.

As already stated, the PCM modulator 12 converts the audio signal 1 into a PCM signal. The block 12 may subject the signal to further processes, such as time-interleaving of blocks of data bits, and a conversion of blocks of n data bits into blocks of m data bits, such as the EFM coding (eight-to-fourteen modulation), as is known from Compact Disc technology. Moreover, the signal may be scrambled. Since all these technologies are known per se they require no further explanation.

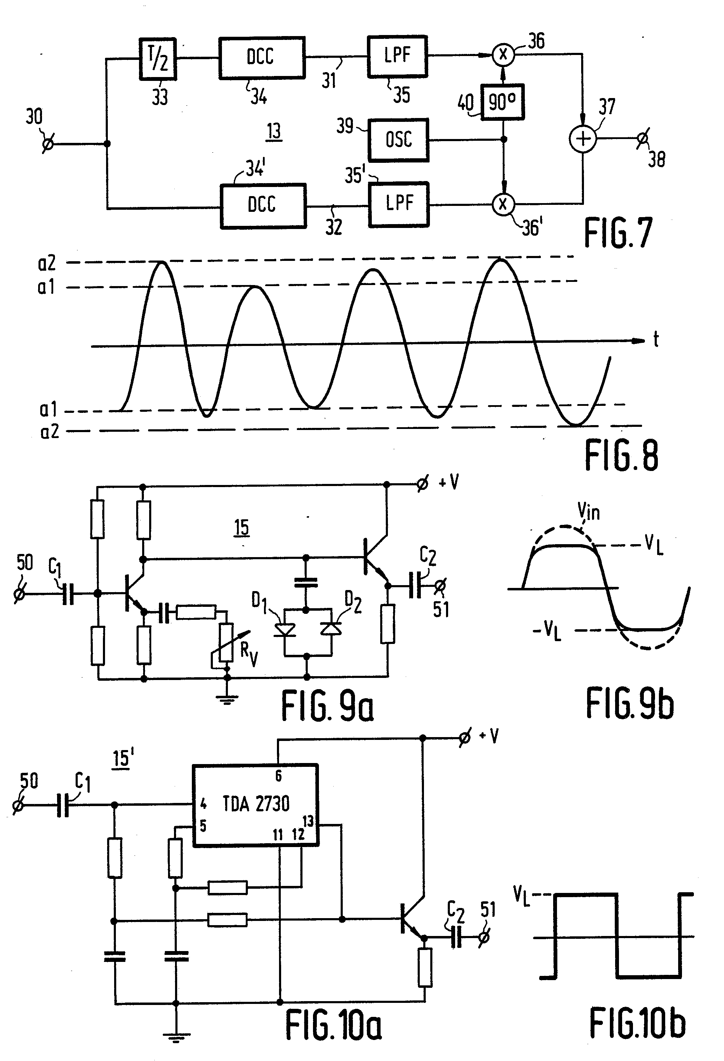

The signal thus processed is applied to the block 13. Fig. 7 shows a circuit arrangement which may be adopted for the block 13. The circuit shown in Fig. 7 is constructed to generate an offset differential QPSK signal. The output signal of the PCM modulator 12 is applied to the input 30 of the second modulator 13. The modulator 13 has two signal paths 31 and 32 coupled to the input 30.

The signal path 31 comprises a series arrangement of a delay unit 33, a converter 34 (also referred to as "differential code converter" or DCC), a low-pass filter 35, and a multiplier stage 36. The signal path 32 also comprises a converter 34' (differential code converter), a low-pass filter 35', and a multiplier stage 36'. The outputs of the stages 36 and 36' are coupled to the inputs of a signal combination unit 37, whose output is coupled to the output 38 of the modulator 13. The modulator further comprises an oscillator circuit 39 having an output coupled directly to a second input of the stage 36' and, via a 90° phase shifter 40, to a second input of the stage 36.

The delay unit 33 delays the signal by T/2, i.e. half the bit length, viewed in time, in the data stream. The differential code converter 34, 34' supplies an output signal which changes at the clock instants, i.e. which goes from logic "high" to logic "low" or from "1" to "0", or vice versa if the input signal is a logic "1" at these instants, and which does not change if the input signal is a logic "0".

The oscillator 39 supplies a sinewave signal having a frequency of approximately 2.5 MHz. In the multiplier stage 36' the signals from the low-pass filter 35' and the oscillator 39 are multiplied by one another. In the multiplier stage 36 the signal from the low-pass filter 35 is multiplied by the 90° phase shifted signal from the oscillator 39.

The signal obtained on the output 38 is shown in Fig. 8 and is referred to as an offset-differential QPSK signal. The Figure clearly shows that the peak-to-peak value of the output signal of the modulator 13 varies as a function of time between the values $a_1$ and $a_2$.

As already stated with reference to Figs. 5 and 6, this means that there will also be variations in the amplitude of the FM audio signal being read. These amplitude variations are also referred to as modulation noise and manifest themselves as an amplitude modulation of the FM audio signal being reproduced. This modulation noise is maximal for the 1.7 MHz carrier wave because this carrier wave is most susceptible to recording current variations of the QPSK signal, see Fig. 5.

In the case that the FM audio signal comprises two carrier waves, as in the present case, the lower sideband of the modulation noise of the 1.7 MHz carrier wave, which extends into the range where the 1.3 MHz carrier is situated, gives rise to an additional noise component in the 1.3 MHz carrier wave.

Conversely, the upper sideband of the modulation noise of the 1.3 MHz carrier wave will result in an additive noise component in the range of the 1.7 MHz carrier wave. Since the 1.3 MHz carrier wave is less susceptible to variations in the recording current of the PCM audio signal, see Fig. 5, this contribution is substantially smaller.

Even if only one carrier wave is recorded in the first layer $L_1$ an asymmetry relative to the carrier wave frequency in the amplitude and/or envelope delay characteristic of the playback response for the signal recorded in the layer $L_1$ will lead to the modulation noise already present being converted into an additive noise contribution.

In accordance with the invention a limiter circuit 15, see Fig. 4 is arranged between the output 14 of the signal processing unit 10 and the write means 9. In this way variation in the peak-to-peak value of the offset differential QPSK signal will be suppressed. This is not a problem because in this case the useful information is not contained in the variations of the peak-to-peak value but in the phase of the signal.

Fig. 9a shows an example of the limiter circuit 15 in Fig. 4. The output signal of the signal processing unit 10 is applied to the input 50 of the limiter circuit 15. An amplitude limited signal is available on the output 51. Limiting is effected by means of diodes $D_1$ and $D_2$ arranged in antiparallel. By means of the capacitors $C_1$ and $C_2$ the circuit is a.c. coupled to the output of the signal-processing unit 10 and to the input of the write means 9.

The circuit provides "soft limiting" of the input signal. This is illustrated in Fig. 9b. The degree of "soft limiting" can be adjusted by means of the potentiometer $R_v$ and/or the amplitude of the applied signal.

Fig. 9b shows that the input signal $V_{in}$ is limited to a value $\pm V_L$. The limited signal now varies more or less smoothly. This explains the term "soft limiting".

Fig. 10a shows another example of the limiter circuit shown in Fig. 4. The limiter circuit 15' employs the IC TDA 2730, which includes a limiter. The IC TDA 2730 is described in the Data Handbook "Integrated Circuits", part IC2 (1984): "Bipolar ICs for video equipment" of N.V. Philips Gloeilampenfabrieken. The circuit provides "hard limiting". This is illustrated in Fig. 10b, which shows the signal on the output 51 of the circuit. The output signal is a squarewave of constant amplitude $V_L$.

It is to be noted that the invention is not limited to the embodiments shown herein. The invention also applies to those embodiments which differ from the embodiments shown herein in respects which are not relevant to the invention. For example, the head width of the heads may be different. Moreover, it is not necessary that the signal recorded in the third layer $L_3$ is a PCM audio signal converted into a QPSK or offset differential QPSK signal. Furthermore, instead of the FM audio signal, another signal may be recorded in the layer $L_1$. For example, another audio signal, teletext or data or tracking signals may be recorded in the layer $L_3$. It is also possible to record one of these signals in the layer $L_1$. It is also possible to record one language, for example English, in one layer $L_1$ and another language, for example German, in the other layer $L_3$. In the foregoing it has been described how an offset differential QPSK signal can be derived from the PCM audio signal. If the delay means 33 in the circuit shown in Fig. 7 is dispensed with, this circuit will supply a differential QPSK signal. If, in addition, the converters 34 and 34' are dispensed with the circuit thus obtained will supply a QPSK signal.

## Claims

1. A device for recording an audio signal and a video signal in tracks which are inclined relative to the longitudinal direction of a magnetic record carrier, which device has a first input terminal for receiving the audio signal and a second input terminal for receiving the video signal, the device comprising a first signal processing unit having an output coupled to first write means arranged on a rotatable head drum, for recording a first signal, for example an FM-modulated audio signal, in a first layer deep in the magnetic record carrier, the second input terminal being coupled to a video-signal-processing unit, which has an output coupled to second write means arranged on the rotatable head drum, for recording the video signal in a second layer less deep in the magnetic record carrier, the device further comprising a third signal-processing unit having an output coupled to third write means arranged on the rotatable head drum, for recording a third signal in a third layer which is less deep than the first and deeper than the second layer in the magnetic record carrier, characterized in that the output of the third signal-processing unit is coupled to an input of a limiter circuit, which limiter circuit is configured to limit the amplitude of the output signal of the third signal-processing unit, and in that an output of the limiter circuit is coupled to the third write means.

2. A device as claimed in Claim 1, characterized in that the third signal-processing unit is adapted to supply an output signal whose peak-to-peak value varies as a function of time.

3. A device as claimed in Claim 1 or 2, characterized in that an input of the third signal-processing unit is coupled to the first input terminal.

4. A device as claimed in Claim 3, characterized in that the third signal processing unit comprises a PCM modulator unit for generating a PCM-modulated audio signal.

5. A device as claimed in Claim 4, characterized in that the third signal-processing unit further comprises a second modulator unit which is arranged after the PCM modulator unit and which is adapted to generate a QPSK (quadrature-phase-shift keying) signal.

6. A device as claimed in Claim 5, characterized in that the second modulator unit is adapted to generate an offset-differential QPSK signal.

FIG.1

FIG. 2

FIG.3a

FIG:3b

FIG.3c

FIG.4

FM mod

FIG.5

FIG.6

**FIG.7**

**FIG.8**

**FIG. 9a**

**FIG.9b**

**FIG.10a**

**FIG.10b**

3-Ⅲ-PHN 12778

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-275041 (HITACHI LTD) <br> * abstract; figure 2 * <br> * page 3, line 31 – page 4, line 10 * <br> --- | 1, 3-6 | G11B5/008 <br> G11B5/02 <br> G11B5/53 <br> G11B20/10 |
| Y | PATENT ABSTRACTS OF JAPAN <br> vol. 11, no. 162 (P-579)(2609) 26 May 1987, <br> & JP-A-61 294665 (HITACHI LTD) 25 December 1986, <br> * the whole document * | 1, 3-6 | |
| A | --- | 2 | |
| Y | EP-A-292740 (MATSUSHITA ELECTRIC IND. CO. LTD.) <br> * abstract; figures 1, 5 * <br> * column 1, line 22 – column 2, line 35 * <br> ----- | 1, 3-6 | |

TECHNICAL FIELDS SEARCHED (Int. Cl.5 )

G11B

The present search report has been drawn up for all claims

| Place of search | Date of completion of the search | Examiner |
|---|---|---|
| THE HAGUE | 26 MARCH 1990 | BENFIELD A.D. |

EPO FORM 1503 03.82 (P0401)